# EUROPEAN PATENT SPECIFICATION

(11) **EP 4 349 933 B1**
(45) Date of publication and mention of the grant of the patent: **07.10.2026**
(21) Application number: 22845183.7
(22) Date of filing: 12.07.2022
(51) Int. Cl.: C09K 5/14, F25B 1/00

(54) **APPLICATION OF AMMONIUM ION-CONTAINING HALOGEN COMPOUND IN SOLID-STATE REFRIGERATION**
ANWENDUNG EINER AMMONIUMIONENHALTIGEN HALOGENVERBINDUNG BEI DER FESTKÖRPERKÜHLUNG
APPLICATION D'UN COMPOSÉ HALOGÉNÉ CONTENANT DES IONS AMMONIUM DANS UNE RÉFRIGÉRATION À L'ÉTAT SOLIDE

(30) Priority: 23.07.2021 CN 202110837618
(43) Date of publication of application: 10.04.2024
(73) Proprietor: Institute Of Metal Research Chinese Academy Of Sciences, Shenyang, Liaoning 110016 (CN)
(72) Inventor: LI, Bing, Shenyang, Liaoning 110016 (CN); QI, Ji, Shenyang, Liaoning 110016 (CN); ZHANG, Zhidong, Shenyang, Liaoning 110016 (CN)
(74) Representative: Tahtadjiev, Konstantin
(86) International application number: PCT/CN2022/105057
(87) International publication number: WO 2023/001018

(56) References cited:
- CN-A- 104 946 954
- CN-A- 107 418 517
- CN-A- 111 876 136
- CN-A- 112 503 798
- CN-A- 113 652 203
- R G ROSS; DEPT. OF PHYS., UMEA UNIV., SWEDEN; P ANDERSSON; DEPT. OF PHYS., UMEA UNIV., SWEDEN;: "Thermal conductivity and heat capacity of ammonium halides under pressure: NH4Br, NH4I and a comparison with NH4Cl", JOURNAL OF PHYSICS C: SOLID STATE PHYSICS., INSTITUTE OF PHYSICS PUBLISHING, BRISTOL, GB, vol. 20, no. 29, 20 October 1987 (1987-10-20), GB , pages 4745 - 4762, XP020010416, ISSN: 0022-3719, DOI: 10.1088/0022-3719/20/29/012
- ONODERA SHINII, IKEGAMI YUSAKU: "Phase transition of the NH.,Br-NH,1 mixed crystals and librational motion of the ammonium ion", SPECTROCHIMICA ACTA. PART A: MOLECULAR SPECTROSCOPY, PERGAMON PRESS, OXFORD., GB, vol. 33A, 31 December 1977 (1977-12-31), GB , pages 771 - 774, XP093027231, ISSN: 0584-8539

## Description

### FIELD OF INVENTION

The present invention relates to the field of solid-state refrigeration applications, and more particularly to the application of an ammonium ion-containing halogen compound in solid-state refrigeration.

### DESCRIPTION OF RELATED ARTS

The application of refrigeration technology has already involved many aspects of our human lives. From the early 20th century to the present, the gas compression refrigeration technology has been widely used in the operation, production, storage, and transportation in industries, as well as in the civil fields such as air conditioning and refrigerators. However, with the introduction of energy-saving and emission reduction requirements, carbon emissions have been gradually restricted. The drawbacks of gas compression refrigeration technology have gradually emerged, because its use of fluorocarbons, carbon fluorides, hydrofluorocarbons, etc. as refrigerants severely damage the ozone layer and exacerbates the greenhouse effect, and thus results in harm to the natural environment. In response to the requirements of sustainable development, it is urgent to find a new type of refrigeration technology that is green, environmentally friendly, and energy efficient.

Based on this background, the solid-state refrigeration technology with features such as green, energy saving, high efficiency and environmental protection has entered people's field of vision. Currently discovered solid-state refrigeration technologies include magnetocaloric refrigeration, electrocaloric refrigeration, elastocaloric refrigeration, and barocaloric refrigeration technologies, which are respectively driven by magnetic fields, electric fields, uniaxial stress fields, and isostatic pressure to induce material phase transitions, so as to form a heat release and heat absorption cycle to achieve refrigeration effects. These refrigeration technologies have attracted extensive research and attention and are likely to replace the conventional gas compression refrigeration technologies. Among them, the advantages of barocaloric refrigeration technology are particularly prominent. The selection of materials for this technology is universal, and a large number of materials with first-order phase transitions within the appropriate temperature range can be used as working fluids for barocaloric refrigeration. The heat absorption and heat release effects are achieved by controlling them with isostatic pressure. Moreover, the barocaloric refrigeration cycle is compatible with the refrigeration cycle equipment of conventional gas compressors, so that it has obvious advantages in large-scale applications.

Moreover, the intrinsic entropy change values of the materials used in the other three refrigeration methods still have a significant gap from practical applications. For example, using an external magnetic field of 5 T to regulate the magnetic phase transition in alloys of La(FeSi)₁₃ and Gd₃Ge₂Si₂ can result in an entropy change of about 20 J kg⁻¹ K⁻¹. The entropy change value, as well as the extremely high driving field, are difficult to meet the requirements of practical applications. Only by finding new refrigerants with larger entropy change and lower driving field, the refrigeration capacity of solid-state refrigeration technology can be improved.

Ross et al. ("Thermal conductivity and heat capacity of ammonium halides under pressure: NH4Br, NH4I and a comparison with NH4Cl", JOURNAL OF PHYSICS C: SOLID STATE PHYSICS, INSTITUTE OF PHYSICS PUBLISHING, BRISTOL, GB, vol. 20, no. 29, 20 October 1987 (1987-10-20), pages 4745-4762, XP020010416,ISSN: 0022-3719, DOI: 10.1088/0022-3719/20/29/012) has used the transient hot-wire method to measure the thermal conductivity and the volumetric heat capacity of the solid phases of NH₄Br and NH₄I over the temperature range of 100-400 K and under pressures up to 2 GPa. All ammonium halides under consideration exhibit a phase designated as I, a plastic crystal phase with an NaCl (B1) structure where NH₄ species undergo relatively free reorientational motion. The I-II phase transition is evidently first-order, with significant volume changes, such as a 14% reduction in NH₄I measured at ambient conditions.

### SUMMARY OF THE PRESENT INVENTION

The object of the present invention is to provide a new efficient refrigeration method that can be driven by pressure by adopting a class of halogen compounds containing ammonium ions as refrigerants. The present invention uses the halogen compound as the refrigerant, applies lower pressure to drive its complete phase transition and generates a huge thermal effect, thereby achieving solid-state refrigeration.

The invention is set out in the appended set of claims 1-6.

When this class of halogen compounds containing ammonium ions undergoes a first-order phase transition from solid to solid, the ammonium ion unit exhibits severe orientation disorder, and the orientation of the unit is random, the rotational time scale is in the picosecond range, and an ultrafast disorder is shown. This ultrafast disorder phase transition can generate a huge heat effect, produce a relatively large entropy change, and have a large latent heat of phase transition. At the same time, this phase transition is a reversible phase transition. When the reverse phase transition occurs, a large amount of heat can be absorbed to achieve the purpose of refrigeration, making the halogen compounds containing ammonium ions excellent refrigerants.

A technical solution of the present invention is an application of an ammonium-ion containing halogen compound in solid-state refrigeration, wherein the ammonium-ion containing halogen compound is one or more of NH₄I, NH₄Cl, NH₄Br.

As a preferred technical solution, NH₄I (Ammonium iodide) is working as a refrigerant with an application temperature range of NH₄I is 268-332K The phase transition temperature of NH₄I is highly sensitive to pressure, and its unit pressure can drive a phase transition temperature shift of up to 0.81 K MPa⁻¹. When a hydrostatic pressure is 20 MPa, an isothermal entropy change of NH₄I driven by static pressure is 89.07 J kg⁻¹ K⁻¹, so that it is particularly suitable for use as a refrigerant.

The present invention further provides a solid-state refrigeration method based on ammonium ion-containing halogen compound and driven by a static pressure, the method comprises a step of using one or more of NH₄I, NH₄Cl, NH₄Br as refrigerants to achieve heat transfer and refrigeration effect by controlling the loading and releasing of pressure to form refrigeration cycles.

The driving force in the method of the present invention is an equal static pressure, and both a piston system and a high-pressure system can be used as the driving force for this refrigeration method.

In the ammonium ion-containing halogen compound described in the present invention, the ammonium ion unit has orientation disorder. Using the ammonium ion-containing halogen compound as the refrigerant, a refrigeration cycle as shown in Fig, 1 is designed.

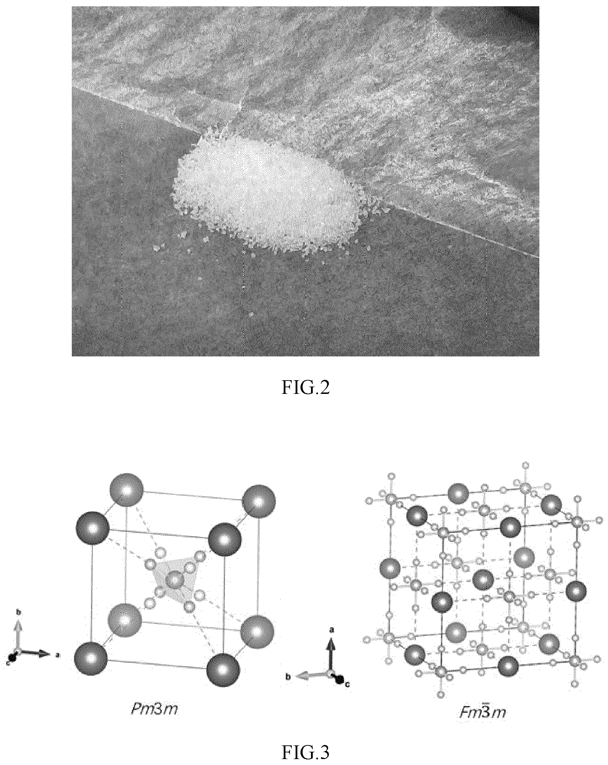

The preferred ammonium ion-containing halogen compound is NH₄I, the material state is shown in Fig. 2.

The method described in the present invention relates to structural transformation. Fig. 3 are schematic views illustrating the crystal structure before and after the phase transition of NH₄I. The material has a first-order phase transition, with phase I at room temperature, it has a cubic crystal structure and a space group of Fmm. It transforms into phase II at low temperature, and still maintains a cubic structure with a space group of Pm*3̅*m. The first-order phase transition occurs at 267 K during heating and occurs at 242 K during cooling.

In the solid-state refrigeration method based on ammonium ion-containing halogen compound and driven by a static pressure of the present invention, the method is driven by a hydrostatic pressure and the applied pressure does not exceed 80MPa. (A preferred driving pressure is 30 MPa-60 MP).

A temperature range of the ammonium ion-containing halogen compound of the present invention is 268-332 K.

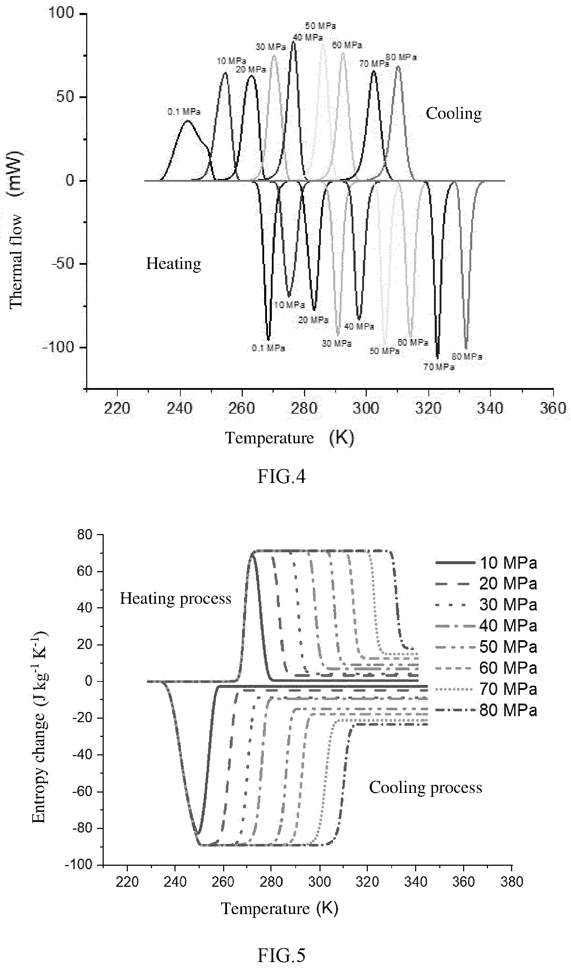

In the method of the present invention, the most preferred refrigerant is NH₄I which can achieve an isothermal entropy change of 89.07 J kg⁻¹ K⁻¹ at a low pressure of 20MPa, as shown in Fig. 5.

The key to the present invention is the order-to-disorder transition of the ammonium ion orientation before and after the phase transition, the ammonium ion-containing halogen compound is an inorganic plastic crystal material with a barocaloric effect. When pressure is applied to such a barocaloric material, the material will release heat to the environment, and when the pressure is released, the barocaloric material will absorb heat from the load, so as to achieve the purpose of refrigeration.

The beneficial effects of the present invention are as follows.

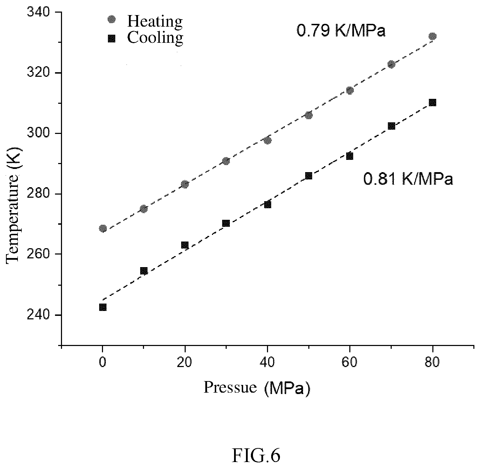

First of all, the ammonium ion-containing halogen compound of the present invention can undergo a complete phase transition with extremely low hydrostatic pressure. When a pressure of 80 MPa is applied, the phase transition temperature increases from 268 to 332 K, with a shift of up to 64 K. The transition temperature shift driven by unit pressure is as high as 0.81 K MPa⁻¹, as shown in Fig. 6. Based on the above phenomenon, a hydristatic pressure of 20 MPa can completely induce the phase transition of NH₄I, with a saturated entropy change value as high as 89.07 J kg⁻¹ K⁻¹.

Secondly, the refrigerant used in the present invention is a halogen compound containing ammonium ion. This type of material has a simple structure, low cost, and can be produced in a large scale.

Thirdly, the solid-state refrigeration effect of the present invention can be achieved through a compression cycle, which is similar to the existing gas compression refrigeration cycle system. It can achieve compatibility and substitution, and has the advantage of directly replacing the refrigerant with this type of material based on compression refrigeration.

### BRIEF DESCRIPTION OF THE DRAWINGS

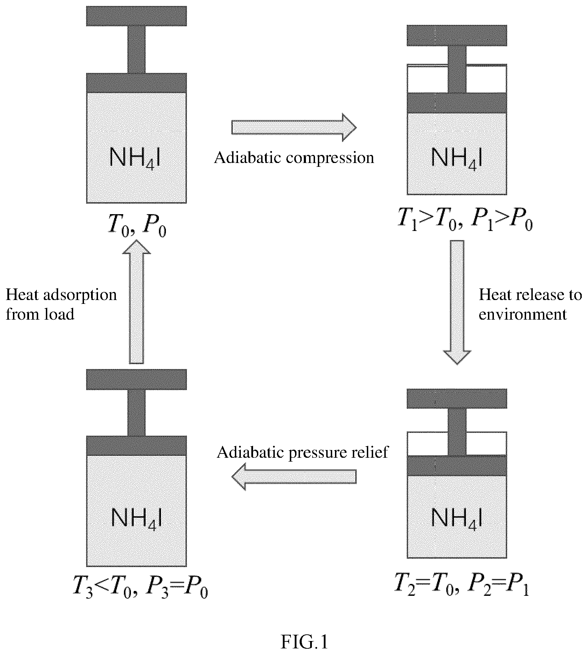

Fig. 1 is a flow diagram illustrating the process of compression refrigeration cycle using an ammonium-ion containing halogen compound;
Fig. 2 is a photograph of NH₄I powder sample;
Fig. 3 shows schematic views of the crystal structure before and after the phase transition of NH₄I;
Fig. 4 illustrates heat flow curves of NH₄I at different pressures, from left to right, 0.1, 10, 20, 30, 40, 50, 60, 70, and 80MPa;
Fig. 5 illustrates entropy change curves of NH₄I at different pressures, from left to right, 10, 20, 30, 40, 50, 60, 70, and 80MPa;
Fig. 6 illustrates a phase transition temperature curve of NH₄I with pressure variation.

### DETAILED DESCRIPTION OF THE PREFERRED EMBODIMENT

### Example 1

### refrigeration effect at 10 MPa:

The refrigerant ammonium iodide was put into an airtight high-pressure sample chamber, and at the same time, an empty sample chamber was put into a sample cavity of a µDSC7 (produced by Setaram, France) microcalorimeter for comparison. Nitrogen gas was introduced into the two sample chambers using a pressurizing device, while maintaining a ambient pressure (0.1 MPa), cooled from 343K to 248K with a cooling rate of 1 K min⁻¹ , and then heated to 343K, the heat flow of the sample was recorded, as shown in the first curve on the left in Fig. 4. Next, the gas pressure was increased to 10 MPa, and the above process was repeated to obtain the data as shown in the second curve in Fig. 4. The heat flow data was converted into entropy data, and the difference between the two curves was the entropy change from 0.1 MPa to 10 MPa, with a maximum value of -82.67 J kg⁻¹ K⁻¹.

### Example 2

### Saturation trend of refrigeration effect:

The refrigerant ammonium iodide was put into the airtight high-pressure sample cell, and at the same time, a reference sample cell was put into the sample chamber of the µDSC7 microcalorimeter. A high-pressure gas control panel was used to introduce pure nitrogen gas and maintain the ambient pressure (0.1MPa), the temperature was decreased from 343 to 248 K with a cooling rate of 1 K min⁻¹, and then the temperature was further increased to 343 K. The heat flow of sample was recorded, as shown in the first curve of Fig. 4. Next, the pressure of the gas was respectively increased to 20MPa, 30 MPa, 40MPa, 50MPa, 60MPa, 70MPa, 80MPa, and the above measurement process was repeated, and the data was obtained as shown in Fig. 4. The heat flow data was converted to entropy data, the two lines were subtracted to obtain the entropy changes corresponding to the occasions when the pressure was respectively increased from 0.1MPa to 10MPa, 20MPa, 30MPa, 40MPa, 50MPa, 60MPa, 70MPa, 80Mpa, as shown in Fig. 5. As can clearly be seen that a saturation trend was presented when the pressure was close to 20MPa. This characteristic determines that a larger entropy change can be released using a smaller pressure.

### Example 3

### Refrigeration cycle:

A cavity of the compressed refrigeration cycle system was filled with the refrigerant ammonium iodide, and under adiabatic conditions with the temperature was 268K and under atmospheric pressure (0.1 MPa), the ammonium iodide refrigerant was applied with a static pressure of 40 MPa to raise its temperature to 278 K; the pressure was maintained at 40 MPa, the refrigerant ammonium iodide was brought into contact with the environment through a heat exchange fluid, and after exchanging heat with environment, it reached equilibrium with the ambient temperature and cooled down to 268 K; under adiabatic conditions, the pressure of ammonium iodide refrigerant was reduced to atmospheric pressure (0.1 MPa), the temperature was decreased to 258 K; a cooling effect was achieved by absorbing heat from the load with refrigerant.

## Claims

1. An use of an ammonium-ion containing halogen compound in solid-state refrigeration, wherein the ammonium-ion containing halogen compound is one or more of NH₄I, NH4Cl, and NH4Br, wherein an application temperature range is 268-332K, wherein the use is driven by a hydrostatic pressure and the applied pressure does not exceed 80MPa.

2. The use according to claim 1, wherein NH4I is working as a refrigerant.

3. The use according to claim 2, wherein when a hydrostatic pressure is 20MPa, an isothermal entropy change driven by the static pressure is 89.07Jkg⁻¹K⁻¹, a phase transition temperature driven by unit pressure is dP/dT which is 0.81KMPa⁻¹.

4. A solid-state refrigeration method based on ammonium ion-containing halogen compound and driven by a static pressure, comprising a step of using one or more of NH4I, NH4Cl, and NH4Br as refrigerants to achieve heat transfer and refrigeration effect by controlling the loading and releasing of pressure to form refrigeration cycles, wherein an application temperature range is 268-332K, wherein the method is driven by a hydrostatic pressure and the applied pressure does not exceed 80MPa.

5. The solid-state refrigeration method based on ammonium ion-containing halogen compound and driven by a static pressure according to claim 4, wherein NH4I is working as the refrigerant .

6. The solid-state refrigeration method based on ammonium ion-containing halogen compound and driven by a static pressure according to claim 4 or 5, wherein a driving pressure is 30MPa-60MPa.

## Patentansprüche

1. Verwendung einer ammoniumionenhaltigen Halogenverbindung in der Festkörperkühlung, wobei die ammoniumionenhaltige Halogenverbindung eine oder mehrere von NH₄I, NH₄Cl und NH₄Br ist, wobei ein Anwendungstemperaturbereich 268-332 K beträgt, wobei die Verwendung durch einen hydrostatischen Druck angetrieben wird und der angelegte Druck 80 MPa nicht überschreitet.

2. Verwendung nach Anspruch 1, wobei NH₄I als Kältemittel wirkt.

3. Verwendung nach Anspruch 2, wobei bei einem hydrostatischen Druck von 20 MPa eine durch den statischen Druck hervorgerufene isotherme Entropieänderung 89.07 Jkg⁻¹·K⁻¹ beträgt und eine durch den Einheitsdruck hervorgerufene Phasenübergangstemperatur dP/dT 0.81 KMPa⁻¹ beträgt.

4. Festkörperkühlverfahren auf Basis einer ammoniumionenhaltigen Halogenverbindung und angetrieben durch einen statischen Druck, umfassend einen Schritt der Verwendung von einem oder mehreren von NH₄I, NH₄Cl und NH₄Br als Kältemittel, um einen Wärmeübertragungs- und Kühlungseffekt durch Steuerung des Aufbringens und Freigebens von Druck zu erzielen, um Kühlkreisläufe zu bilden, wobei ein Anwendungstemperaturbereich 268-332 K beträgt, wobei das Verfahren durch einen hydrostatischen Druck angetrieben wird und der angelegte Druck 80 MPa nicht überschreitet.

5. Festkörperkühlverfahren auf Basis einer ammoniumionenhaltigen Halogenverbindung und angetrieben durch einen statischen Druck nach Anspruch 4, wobei NH₄I als Kältemittel wirkt.

6. Festkörperkühlverfahren auf Basis einer ammoniumionenhaltigen Halogenverbindung und angetrieben durch einen statischen Druck nach Anspruch 4 oder 5, wobei ein Antriebsdruck 30 MPa-60 MPa beträgt.

## Revendications

1. Utilisation d'un composé halogéné contenant des ions ammonium dans la réfrigération à l'état solide, le composé halogéné contenant des ions ammonium étant un ou plusieurs de NH₄I, NH₄Cl et NH₄Br, la plage de température d'application étant de 268-332 K, l'utilisation étant entraînée par une pression hydrostatique et la pression appliquée ne dépassant pas 80 MPa.

2. Utilisation selon la revendication 1, dans laquelle NH₄I fonctionne comme frigorigène.

3. Utilisation selon la revendication 2, dans laquelle, lorsqu'une pression hydrostatique est de 20 MPa, une variation d'entropie isotherme entraînée par la pression statique est de 89.07 Jkg⁻¹·K⁻¹, une température de transition de phase entraînée par la pression unitaire étant dP/dT qui est de 0.81 K·MPa⁻¹.

4. Procédé de réfrigération à l'état solide basé sur un composé halogéné contenant des ions ammonium et entraîné par une pression statique, comprenant une étape consistant à utiliser un ou plusieurs de NH₄I, NH₄Cl et NH₄Br comme frigorigènes pour obtenir un effet de transfert de chaleur et de réfrigération en contrôlant l'application et le relâchement de la pression pour former des cycles de réfrigération, la plage de température d'application étant de 268-332 K, le procédé étant entraîné par une pression hydrostatique et la pression appliquée ne dépassant pas 80 MPa.

5. Procédé de réfrigération à l'état solide basé sur un composé halogéné contenant des ions ammonium et entraîné par une pression statique selon la revendication 4, dans lequel NH₄I fonctionne comme frigorigène.

6. Procédé de réfrigération à l'état solide basé sur un composé halogéné contenant des ions ammonium et entraîné par une pression statique selon la revendication 4 ou 5, dans lequel une pression motrice est de 30 MPa-60 MPa.
